# EUROPEAN PATENT APPLICATION

(11) **EP 4 769 673 A1**
(43) Date of publication of application: **01.07.2026**
(21) Application number: 25226734.9
(22) Date of filing: 23.12.2025
(51) Int. Cl.: H01M 10/658, H01M 10/04, H01M 10/0562, H01M 50/209, H01M 50/293

(54) **BATTERY MODULE**

(30) Priority: 27.12.2024 JP 2024233008
(71) Applicant: Toyota Jidosha Kabushiki Kaisha, Toyota-shi, Aichi-ken 471-8571 (JP)
(72) Inventor: NOSE, Takafumi, Toyota-shi, 471-8571 (JP); TAKAGAWA, Jun, Toyota-shi, 471-8571 (JP); MOCHIZUKI, Yugo, Toyota-shi, 471-8571 (JP)
(74) Representative: TBK

(57) **Abstract**

A battery module includes: a stack in which plural battery cells are stacked; a pair of first members disposed respectively at both ends in a stacking axis direction of the stack, such that they sandwich the stack therebetween; and a pair of end plates disposed respectively at both ends in the stacking axis direction, such that they sandwich the stack therebetween via the first members, wherein the first members are single-layer members containing an elastic body, and are disposed such that they contact the battery cells and the end plates.

## Description

### BACKGROUND

### Technical Field

The present disclosure relates to a battery module.

### Related Art

In a battery module that includes plural battery cells, in order to reduce heat conduction between the battery cells, inter battery cell members that are heat insulating are disposed between the respective battery cells, or between the battery cells and the housing, or between the respective battery cells and between the battery cells and the housing.

There is known a power source device that, due to separators that have a specific layer structure being disposed between respective battery cells, can suppress a deterioration in the heat insulating characteristic of the separators and can uniformize the pressure of pressing surfaces of the battery cells (International Application Publication No. 2020/194939). Further, there is known a battery that has an excellent fire spread preventing performance due to fire spread preventing sheets, which have a rubber sheet, a heat insulating sheet and an adhesive layer, being provided as inter battery cell members between the respective battery cells and between the battery cells and the housing (Japanese Patent Application Laid-Open (JP-A) No. 2023-148035).

### SUMMARY

There are cases in which, depending on the application of a battery module, the qualities of suppressing the occurrence of problems at the battery module to an even higher degree and further improving the reliability thereof are required. In such cases, from the standpoint of energy density, it is also required that the volume of the battery module overall not be increased.

A topic that an embodiment of the present disclosure addresses is the provision of a battery module having improved reliability without decreased energy density.

Means for addressing the above-described topic include the following aspects.

A first aspect of the present disclosure provides a battery module including: a stack in which plural battery cells are stacked; a pair of first members disposed respectively at both ends in a stacking axis direction of the stack, such that they sandwich the stack therebetween; and a pair of end plates disposed respectively at both ends in the stacking axis direction, such that they sandwich the stack therebetween via the first members, wherein the first members are single-layer members containing an elastic body, and are disposed such that they contact the battery cells and the end plates.

A second aspect of the present disclosure provides the battery module of the first aspect, including second members disposed between the plural battery cells respectively, wherein the second members are multilayer members that include at least an elastic body layer, which contains an elastic body, and a heat insulating material layer that contains a heat insulating material.

A third aspect of the present disclosure provides the battery module of the second aspect, wherein the first members contain a material in common with a material of the elastic body layers included in the second members.

A fourth aspect of the present disclosure provides the battery module of any one of the first to third aspects, wherein: the end plates are multilayer structures of plural layers that are layered in the stacking axis direction, and include at least a metal layer and a resin layer, and the resin layer is layered so as to cover an entirety of a surface, which is at the stack side, of the metal layer.

A fifth aspect of the present disclosure provides the battery module of the fourth aspect, wherein a thickness of the resin layer in the stacking axis direction is 1 mm or more.

A sixth aspect of the present disclosure provides the battery module of any one of the first to fifth aspects, wherein the pair of end plates fix the pair of first members and the stack in a state of applying pressure thereto.

A seventh aspect of the present disclosure provides the battery module of any one of the first to sixth aspects, wherein the battery cells are solid-state battery cells.

In accordance with an embodiment of the present disclosure, there can be provided a battery module having improved reliability without decreased energy density.

### BRIEF DESCRIPTION OF THE DRAWINGS

Fig. 1 is a schematic structural view, seen in a side view, of a battery module that is an embodiment of the present disclosure;
Fig. 2 is a schematic structural view, seen in a side view, of the battery module that is an embodiment of the present disclosure and in which end plates are multilayer structures; and
Fig. 3 is a schematic structural view, seen in a side view, of an example of a conventional battery module.

### DETAILED DESCRIPTION

An embodiment of the present disclosure is described in detail hereinafter with reference to the appended drawings. However, the technical scope of the present disclosure is not limited to this example.
In the present disclosure, numerical value ranges expressed by using "-" mean ranges in which the numerical values listed before and after the "-" are included as the minimum value and maximum value.
In numerical value ranges that are expressed in a stepwise manner in the present disclosure, the maximum value or the minimum value listed in a given numerical value range may be substituted by the maximum value or the minimum value of another numerical value range that is expressed in a stepwise manner. In the numerical value ranges put forth in the present disclosure, the maximum value or the minimum value of a given numerical value range may be substituted by a value set forth in the Examples.
In the present disclosure, combinations of two or more preferable aspects are more preferable aspects.
In the present disclosure, when describing an embodiment with reference to the drawings, the structure of that embodiment is not limited to the structure illustrated in the drawings. Further, the sizes of the members in the respective drawings are schematic, and the relative relationships among the sizes of the members are not limited to these. Further, in order to avoid complication of the drawings, there are cases in which reference numerals are applied to only some of plural members or the like that are substantially the same. In the drawings, reference numerals that are the same or similar indicate elements that are the same or similar. In the present disclosure, semi-solid-state batteries and all-solid-state batteries are included as the "solid-state battery".

### <Battery Module>

A battery module that is an embodiment of the present disclosure has a stack in which plural battery cells are stacked, a pair of first members, and a pair of end plates. The pair of first members are disposed respectively at both ends in the stacking axis direction of the stack, such that they sandwich the stack therebetween. The end plates are disposed respectively at both ends in the stacking axis direction of the stack, such that they sandwich the stack therebetween via the first members. The first members are single-layer members containing an elastic body, and are disposed such that they contact battery cells and the end plates. Namely, among the pair of end plates, one end plate is disposed such that it contacts a first member at one end portion in the stacking axis direction of the stack, and the other end plate is disposed such that it contacts a first member at the other end portion in the stacking axis direction of the stack.

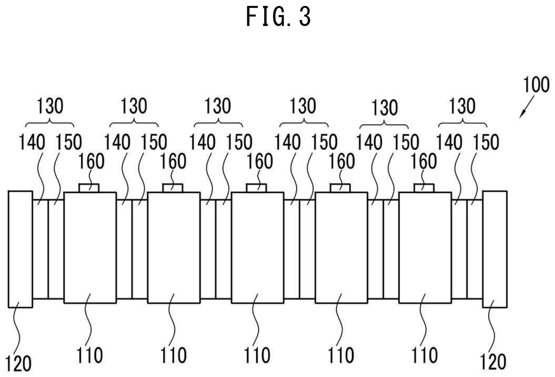

As illustrated in Fig. 3, in a conventional battery module 100, inter battery cell members 130 are disposed, for example, between battery cells 110 and the battery cells 110, and between the battery cells 110 and end plates 120. A layered body in which an elastic member 140 and a heat insulating member 150 are layered is used as the inter battery cell member 130. Addressing of expansion/contraction of the battery cells 110, and suppression of heat conduction between the battery cells 110, and the like are devised by the elastic members 140 and the heat insulating members 150 of the inter battery cell members 130. In the battery module 100, the plural battery cells 110 are connected in series or are connected in parallel, and output of DC electric power of the required voltage is possible by electrodes 160.

The present inventors investigated further improving the reliability of a battery module without decreasing the energy density, i.e., while maintaining the energy density, and focused on the internal structure of the battery module. The present inventors discovered that, by placing specific members, which have a layer structure that is different than that of inter battery cell members, between battery cells and the end plates, the energy density is improved and reliability can be realized to an even higher degree.

Although the detailed mechanism by which the above-described effect is obtained is unclear, it is surmised that the following effects arise by, in a battery module, placing specific members, which contain an elastic body and have a layer structure that is different than that of the inter battery cell members, at the stacking axis direction end portions of the battery cells.

First, the layer structure at the periphery of a battery cell that is adjacent to an end plate is different than that of a battery cell to which a battery cell is adjacent. Therefore, it is thought that, at the time of volume expansion of a battery cell, it is easy for non-uniformity of the forces in the stacking axis direction that are applied to the both main surfaces of a battery cell to arise. However, it is assumed that, by placing specific members at the stacking axis direction end portions of the end plates and the battery cells, the effects of volume expansion of the battery cells that are adjacent to the end plates are mitigated appropriately, and therefore, non-uniformity of forces in the stacking axis direction is eliminated. It is assumed that, as a result, tilting, offset and the like of the respective structural elements of the stack are suppressed, and offset and the like of peripheral parts such as bridges for electrode connection also are suppressed, and the reliability as a battery module improves. Further, it is surmised that, as compared with a case in which a member is not disposed between an end plate and the battery cell adjacent to that end plate, for example, excessive force that is applied to the end plate is suppressed, and reliability as a battery module is improved.

Second, in a battery module, it is possible to dispose specific members, which contain an elastic body and have a layer structure that is different than that of the inter battery cell members, at the stacking axis direction end portions of the battery cells as a single-layer structure whose thickness is thinner than the inter battery cell members. As a result, it is assumed that the volume of the battery module on the whole decreases, and an improvement in the energy density is devised.

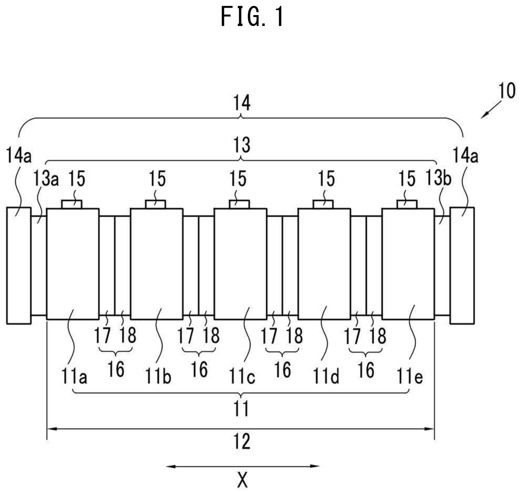

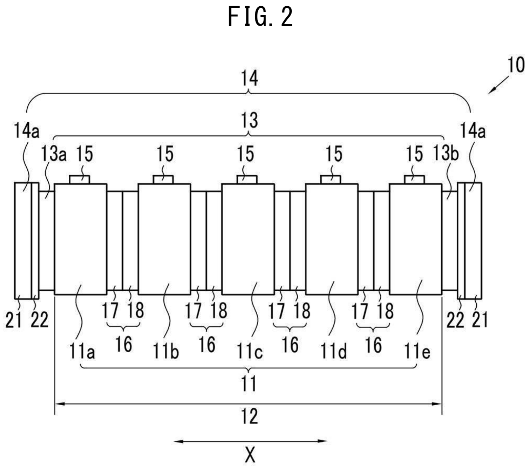

Hereinafter, a battery module that is an embodiment of the present disclosure is described with reference to Fig. 1 and Fig. 2.

As illustrated in Fig. 1, a battery module 10 that is an embodiment of the present disclosure has a stack 12 in which plural battery cells 11 are stacked, a pair of first members 13 and a pair of end plates 14.

### (Stack)

The stack 12 is formed by the plural battery cells 11 being stacked. The battery cells 11 respectively are required thicknesses, and are substantially rectangular when viewed from the stacking axis direction (the X direction in Fig. 1) that is the thickness direction (hereinafter also called when viewed from the stacking axis direction). The plural battery cells 11 are arrayed in the stacking axis direction X and form the stack 12. In the battery module 10, the plural battery cells 11 are connected in series or are connected in parallel in the stack 12, and output of DC electric power of the required voltage is possible by electrodes 15.

At the stack 12, for example, five of the battery cells 11 that are battery cell 11a through battery cell 11e are stacked. The number of the battery cells 11 is not limited to five, and it suffices for there to be a plural number that is two or more thereof depending on the application of the battery module 10, and the number may be 20 - 30 for example.

A secondary battery such as a lithium ion battery is used as the battery cell 11. Note that the battery cell 11 is not limited to a lithium ion battery, and may be any of various types of secondary batteries such as a semi-solid-state battery that has a gel layer containing an electrolyte liquid and a polymer between an electrode and a solid electrolyte, an all-solid-state battery that uses a solid electrolyte as the electrolyte, a lead battery, a nickel-cadmium battery, or a nickel-hydrogen battery. The solid electrolyte may contain an electrolyte liquid in an amount of less than 10 mass% with respect to the entire amount of the electrolyte. "Solid-state battery" in the present disclosure is a generic term for batteries in which the liquid electrolyte is less than 10 mass% with respect to the entire amount of the electrolyte. Thereamong, solid-state batteries in which the liquid electrolyte is 1 mass% or less are considered to be "all-solid-state batteries", and solid-state batteries in which the liquid electrolyte is greater than 1 mass% and less than 10 mass% are considered to be "semi-solid-state batteries". Further, the battery cell 11 is not limited to a secondary battery, and may be a primary battery such as a manganese dry battery, a lithium graphite fluoride primary battery, or a lithium manganese dioxide primary battery. Thereamong, the battery cell 11 is preferably a semi-solid-state battery or an all-solid-state battery, and is more preferably an all-solid-state battery.

### (First Members)

The pair of first members 13 are disposed at the both ends in the stacking axis direction X of the stack 12 respectively, so as to sandwich the stack 12. First member 13a is disposed at one end portion in the stacking axis direction X of the stack 12, and first member 13b is disposed at the other end portion in the stacking axis direction X. The first member 13a and the first member 13b structure the pair of first members 13. Note that, in the present disclosure, there are cases in which the first member 13a and the first member 13b are called the first members 13 without differentiating therebetween.

The first member 13 is a single-layer member containing an elastic body. The first member 13 is a single member in which the entire member is formed from a homogenous material. Because the first member 13 is a single member in which the entire member is elastic, appropriate elasticity of good uniformity can be imparted to the first member 13 on the whole. Accordingly, the expansion pressures of the battery cells 11 that are adjacent to the end plates 14 are received more reliably and can be made uniform. The shape of the first members 13 is, in the same way as the battery cells 11, substantially rectangular as seen from the stacking axis direction (the X direction in Fig. 1) that is the thickness direction. From the standpoint of avoiding interference with peripheral parts, as the shapes of the first members 13, the heights and widths thereof as seen from the stacking axis direction are preferably smaller than those of the battery cells 11.

Materials, which are elastic and are used as in conventionally known art as inter battery cell members of the battery module 10, can be used for the first members 13. The first members 13 are preferably set in accordance with the type, the degree of expansion, the size and the like of the battery cells 11.

A member, whose thickness in the stacking axis direction X has been adjusted to be thinner in accordance with the expansion pressure of the battery cell 11, the type of the elastic body and the like, can be used as the first member 13. Accordingly, as compared with a case of using a member having a multilayer structure formed from an elastic body layer and a heat insulating material layer for example, the first member 13 that is adjacent to the end plate 14 is made to be only a layer that contains an elastic body, and therefore, the thickness can be made to be thinner, and the energy density of the battery module 10 can be further improved. Usually, the elastic performance of the heat insulating material layer that is other than the elastic body layer is poor as compared with the elastic performance of the elastic body layer. Therefore, by forming the first member 13 of only a layer that contains an elastic body, the elastic performance of the first member 13 can be made to be more preferable.

The elastic body in the first member 13 refers to a material having a Young's modulus of 200 kPa or greater. Any of the following elastic bodies may be used: (i) one that exhibits elasticity by virtue of its material (e.g., rubber), (ii) one that exhibits elasticity due to a porous or sponge-like structure, or (iii) one in which the material itself is elastic and the structure is porous or sponge-like. In view of preventing fire spread, the elastic body is preferably a material having excellent flame resistance, that is not lost even at high temperatures, and that can maintain insulation from surrounding components.

Specifically, an Si-based rubber material is preferable, and silicone rubber is more preferable as the elastic body. Further, from the standpoint of providing the appropriate elasticity, it is even more preferable that the elastic body be a foamed silicone rubber.

### (End Plates)

The pair of end plates 14 are disposed at the both ends in the stacking axis direction X respectively, so as to sandwich the stack 12 via the first members 13. The first member 13a is disposed at one end portion in the stacking axis direction X of the stack 12, and end plate 14a is disposed so as to contact the first member 13a. The first member 13b is disposed at the another end portion in the stacking axis direction X, and end plate 14b is disposed so as to contact the first member 13b. The end plate 14a and the end plate 14b structure the pair of end plates 14. Note that, in the present disclosure, there are cases in which the end plate 14a and the end plate 14b are called the end plates 14 without differentiating therebetween.

The end plates 14 function as restraining plates that fix the first members 13 and the stack 12 in a state of applying pressure thereto. Because the end plates 14 receive the expansion pressure of the stack 12, it is preferable that the end plates 14 be metal plates formed from metal so as not to deform under the expansion pressure. Metals that are used in conventionally known art can be used as the end plates 14. Examples of the metal are aluminum and iron. Although it depends on the type of the battery module 10 as well, aluminum and iron are preferable from the standpoints of functioning as the end plates 14 and being lightweight.

Although it depends on the type of the battery cells 11 as well, the end plates 14 preferably apply a restraining pressure of, for example, 0.1 MPa or more, 1 MPa or more, or 5 MPa or more in the stacking axis direction X of the stack 12. Further, the end plates 14 preferably apply a restraining pressure of, for example, 100 MPa or less, 50 MPa or less or 20 MPa or less.

The end plates 14 are substantially rectangular as seen from the stacking axis direction (the X direction in Fig. 1) that is the thickness direction, and from the standpoint of functioning as restraining plates, are preferably around the same size as the battery cells 11.

### (Structure of Battery Module)

At the battery module 10, the end plates 14, the first members 13 and the battery cells 11 are disposed in that order so as to contact one another at the both end portions in the stacking axis direction X. Specifically, at the one end portion in the stacking axis direction X, the end plate 14a, the first member 13a and the battery cell 11a are disposed in that order so as to contact one another. Further, at the another end portion in the stacking axis direction X, the end plate 14b, the first member 13b and the battery cell 11e are disposed in that order so as to contact one another.

At the battery cell 11a or the battery cell 11e that is adjacent to the end plate 14, the first member 13 appropriately mitigates and uniformizes the effects of volume expansion, and therefore, non-uniformity of forces in the stacking axis direction X is eliminated. Due thereto, tilting, offset and the like of the respective structural elements are suppressed, and offset and the like of peripheral parts such as bridges for electrode connection also are suppressed, and the reliability of the battery module 10 improves. Further, in accordance with the first members 13, the thickness can be made to be thinner, and the function of uniformizing the expansion pressure of the battery cells 11 is excellent. Accordingly, the battery module 10 is a battery module that has improved reliability without lowering the energy density.

Note that the battery module 10 may have plural second members 16 disposed between the plural battery cells 11, respectively. The second members 16 preferably are members of plural layers that are layered in the stacking axis direction X. It is preferable that the second member 16 include at least an elastic body layer 17 that contains an elastic body, and a heat insulating material layer 18 that contains a heat insulating material. Owing to the second members 16, thermal runaway due to the adjacent battery cells 11 can be suppressed, and the battery cells 11 can be restrained appropriately. Accordingly, owing to the structure in which the first members 13, which exhibit appropriate functions at the end portions, are disposed at the stacking axis direction X end portions of the battery module 10, and the second members 16, which exhibit appropriate functions between the battery cells 11, are disposed between the battery cells 11, the battery module 10 can be made to be a battery module that has improved reliability without lowering the energy density.

It suffices for the second members 16 to be members having plural layers that are layered in the stacking axis direction X, and the second members 16 may be two-layer structures or may be three-layer structures. For example, the second member 16 may be a three-layer structure in which the heat insulating material layer 18, the elastic body layer 17 and the heat insulating material layer 18 are layered in that order. Further, the second member 16 may contain a layer other than the elastic body layer 17 and the heat insulating material layer 18.

Materials, which are used in conventionally known art as inter battery cell members, can be used as the elastic body layer 17 and the heat insulating material layer 18, respectively. The elastic body contained in the elastic body layer 17 can be made to be an elastic body that is similar to that described as the elastic body of the first member 13. The heat insulating material that the heat insulating material layer 18 contains means a heat insulating material whose thermal conductivity is 0.03 W/(m•K) or less. A silica aerogel whose main material is silica is preferable, and, from the standpoint of the heat insulating performance, a silica aerogel structured by a silicon dioxide framework and 90% - 98% air is more preferable. It is preferable that the elastic body layer 17 and the heat insulating material layer 18 be materials that have excellent fire resistance and that can maintain the insulating ability with respect to peripheral parts.

From the standpoint of avoiding interference with peripheral parts, as the shapes of the elastic body layers 17 and the heat insulating material layers 18, the heights and widths thereof as seen from the stacking axis direction are preferably the same as or smaller than those of the battery cells 11. Further, thinner thicknesses of the elastic body layers 17, the heat insulating material layers 18 and the second members 16 are preferable.

It is preferable that the first members 13 contain a material in common with the elastic body layers 17 of the second members 16. It is preferable that the first members 13 and the elastic body layers 17 contained by the second members 16 are formed from the same materials. For example, in a case in which sheet-shaped materials are used as the materials of the first members 13 and the elastic body layers 17, the first members 13 and the elastic body layers 17 may be formed by being cut-out from the same material. Accordingly, the compositions and the thicknesses of the first members 13 and the elastic body layers 17 are approximately the same. Due thereto, the manufacturing cost of the battery module 10 can be reduced. Further, as compared with a case of using layered bodies that are similar to the second members 16 as the first members 13, the first members 13 that are single-layer structures can used, and therefore, the thickness can be made to be thinner, and the energy density of the battery module 10 can be improved.

Note that the end plates 14 may be multilayer structures of plural layers that are layered in the stacking axis direction X. If the end plates 14 are multilayer structures, it is preferable that the end plates 14 contain at least a metal layer and a resin layer. Further, from the standpoint of the insulating ability, it is preferable that the resin layer be layered so as to cover the entirety of the surface, which is at the stack 12 side, of the metal layer.

The metal in the metal layer is similar to that described above with regard to the end plates 14. The resin in the resin layer is preferably a resin that is not self-heating and that is insulating. Specific examples of the resin are, as thermoplastic resins, polyethylene, polypropylene and polycarbonate, and, as thermosetting resins, silicone resins. From standpoints such as processability and cost, the resin is preferably polypropylene (hereinafter called PP). From the standpoint of the insulating ability, preferable types of PP are homopolymer PP, random copolymer PP, unfilled grade PP, high crystallinity PP, electrical insulation grade PP, and PP in which additives such as fire retardant additives have been compounded.

In order to prevent discharging to the end plate 14 from the battery cell 11 that is adjacent to that end plate 14, it is preferable that the resin layer be layered as an insulating layer so as to cover the entirety of the surface, which is at the stack side, of the metal layer. Specifically, it is preferable that the size of the resin layer be formed to a size that is not smaller than the size of the metal layer and that can cover at least the front surface of the metal layer. Further, from the standpoint of the insulating function, the thickness of the resin layer is preferably a thickness such that the resin layer can exhibit an insulating ability. From the standpoint of energy density, it is preferable that the thickness of the resin layer be a thickness that is not too thick. Specifically, it is preferable that the thickness of the resin layer in the stacking axis direction X be 1 mm or more. From the standpoint of energy density, it is preferable that the thickness of the resin layer be thinner.

As illustrated in Fig. 2, it is preferable that the end plate 14 be a multilayer structure, and that a metal layer 21 and a resin layer 22 are layered in that order in the stacking axis direction X. It is preferable that the resin layer 22 be a size such that the resin layer 22 covers the metal layer 21, and that the resin layer 22 contacts the first member 13.

### <Types of Battery Modules>

The battery module 10 that is an embodiment of the present disclosure is suitable in a case in which the battery cells 11 include the battery cells 11 whose volumes change due to charging and discharging. The battery cells 11 are preferably solid-state batteries, lithium ion batteries or the like. In a case in which the battery cells 11 are solid-state batteries at which it is easy for volume changes to occur due to expansion and contraction, the battery module 10 can exhibit these effects more markedly. The solid-state battery may be either of a semi-solid-state battery or an all-solid-state battery.

### <Applications of Battery Module>

Applications of the battery module 10 that is an embodiment of the present disclosure are not particularly limited. Examples of representative applications are use as the power source of a vehicle, an electronic device or a power storage system. The battery module 10 can be made to be a high-volume battery module that contains a plurality of the battery cells 11. Accordingly, thereamong, the battery module of the present disclosure is preferably used as the power source of a vehicle. Examples of the vehicle are electric four-wheel vehicles, electric two-wheel vehicles, gasoline-powered vehicles and diesel-powered vehicles. Examples of electric four-wheel vehicles are battery electric vehicles (BEVs), plug-in hybrid electric vehicles (PHEVs), and hybrid electric vehicles (HEVs). Examples of electric two-wheel vehicles are electric motorcycles and electric assist bicycles.

Explanation of Reference Numerals

## Claims

1. A battery module comprising:
a stack in which a plurality of battery cells are stacked;
a pair of first members disposed respectively at both ends in a stacking axis direction of the stack, such that they sandwich the stack therebetween; and
a pair of end plates disposed respectively at both ends in the stacking axis direction, such that they sandwich the stack therebetween via the first members,
wherein the first members are single-layer members containing an elastic body, and are disposed such that they contact the battery cells and the end plates.

2. The battery module of claim 1, comprising second members disposed between the plurality of battery cells respectively,
wherein the second members are multilayer members that include at least an elastic body layer, which contains an elastic body, and a heat insulating material layer that contains a heat insulating material.

3. The battery module of claim 2, wherein the first members contain a material in common with a material of the elastic body layers included in the second members.

4. The battery module of claim 1, wherein:
the end plates are multilayer structures of a plurality of layers that are layered in the stacking axis direction, and include at least a metal layer and a resin layer, and
the resin layer is layered so as to cover an entirety of a surface, which is at a stack side, of the metal layer.

5. The battery module of claim 4, wherein a thickness of the resin layer in the stacking axis direction is 1 mm or more.

6. The battery module of claim 1, wherein the pair of end plates fix the pair of first members and the stack in a state of applying pressure thereto.

7. The battery module of claim 1, wherein the battery cells are solid-state battery cells.
